# EUROPEAN PATENT SPECIFICATION

(11) **EP 0 688 746 B1**
(45) Date of publication and mention of the grant of the patent: **26.01.2000**
(21) Application number: 95201396.9
(22) Date of filing: 29.05.1995
(51) Int. Cl.: C04B 35/634, B22F 3/10, B22F 1/00

(54) **Method of manufacturing molded articles from metallic or ceramic powdered particles and binder system suitable for use therein**
Verfahren zur Herstellung von Formen aus metallischem oder keramischem Pulver und dabei verwendbares Bindemittelsystem
Procédé de préparation d'articles moulés à partir de poudre métallique ou céramique et système de liants pour cette préparation

(30) Priority: 27.05.1994 NL 9400879
(43) Date of publication of application: 27.12.1995
(73) Proprietor: Technische Universiteit Delft, 2628 BL Delft (NL)
(72) Inventor: Vervoort, Petrus Jacobus, NL-3206 EK Spijkenisse (NL); Vetter, Rob, NL-2636 EG Schipluiden (NL); Duszczyk, Jerzy, NL-2622 GH Delft (NL)
(74) Representative: Smulders, Theodorus A.H.J., Ir.

(56) References cited:
- EP-A- 0 362 866
- EP-A- 0 428 999
- EP-A- 0 559 987
- GB-A- 2 081 733
- PATENT ABSTRACTS OF JAPAN vol. 014 no. 090 (C-0691) ,20 February 1990 & JP-A-01 301563 (SHOWA DENKO KK) 5 December 1989,
- CHEMICAL ABSTRACTS, vol. 119, no. 14, 4 October 1993 Columbus, Ohio, US; abstract no. 145147, KATO, YUTAKA ET AL 'Binder removal of ceramic green ware' & JP-A-05 098 308 (KATO, YUTAKA;KATO, TADASHI; KANEKO, YASUNARI; SAGAWA, YOSHIMITSU)

## Description

The invention relates to the injection molding of metallic or ceramic powdered particles, known under the name of powder injection molding (PIM), and more particularly relates to the use therein of a special binder system, which on the one hand provides that the fabricated form is accurately maintained and which on the other hand can easily be removed.

The injection molding of polymers in which metallic or ceramic powder particles are dispersed, is a generally known method of improving the mechanical, physical or electrical properties of the polymers. By choosing the content of powder particles to be high, injection molding merges, as it were, into powder injection molding (PIM).

So powder injection molding is a combination of the technology of injection molding plastics to manufacture desired moldings and the technology to sinter powder particles to form compact solid bodies. In powder injection molding a metallic or ceramic powder is mixed with a binder which is solid at room temperature, but liquifies upon heating. That mixture can be processed in conventional injection molding machines for plastic materials to form a molding. Thus a large number of articles can be produced fast, all of the same shape with a close dimensional tolerance. On account of the fluid behavior of the mixture during the manufacture of the molding, this last possesses a uniform density. The initial molding, also referred to as green body, is subjected to a debinding treatment to remove the binder at least partly, whereafter the molding is sintered in an oven to obtain the final article.

Powder injection molding makes it possible to manufacture complex articles with a uniform density. Very small articles too can be manufactured with great precision. Material-removal machining operations can often be omitted, while waste of the cuts can be recycled. As a result, the machining costs are low and the loss of material is small, which is especially interesting with regard to hard and expensive materials such as tungsten, composites, intermetallic compounds, ceramics and superalloys.

The success of powder injection molding is highly dependent on the appropriate choice of the binder. This is not easy, since the binder must satisfy numerous, often diverging requirements. In fact, the binder has to function as a flow and carrier medium for the large amount of fine powder particles during mixing and injection molding. The binder must be well compatible with the powder particles and wet them properly to obtain efficient mixture. At the injection molding temperature the viscosity of the binder must be sufficiently low to manufacure a substantially perfect molding, but not so low that an uneven distribution or segregation of the powder particles arises. Further, the binder should be solid after cooling and give sufficient strength to the green body. It must be possible for the binder to be removed again without damaging the integrity of the molding or adversely affecting the properties of the eventual article. Therefore the removal of the binder should take place gradually and without leaving binder residues in the eventual article. Finally, measures or treatments which are detrimental to the environment must be avoided as much as possible.

The binders used heretofore typically consist of a combination of components with which it is attempted to satisfy the various above-described requirements. US-A-4,197,118 describes the use of a binder which is removed by bringing the green body to a temperature above the melting point of the binder and then carrying out an extraction with a solvent for the binder, which is in the vapor phase. This method is slow and laborious and does not provide a good form retention. Moreover the method is environmentally unsound on account of the organic solvents used. As is described, the binder consists of only one component, but the binder can also consist of a combination of three components: the first component then consists, for instance, of polyethylene glycol (PEG) or polyvinyl alcohol (PVA) and can be removed with water as solvent; the second component preferably consists of polystyrene, which is removed with methylene chloride, or can consist of dioctylphthalate, which is removed with Freon FT; and the third component, which serves to improve the strength, can consist of polyethylene and is removed during sintering. Although the use of three components instead of one leads to a better form retention, even then the method is environmentally unsound and moreover it is even slower and more laborious than the earlier described method with a binder from only one component.

According to US-A-4,765,950 in the powder injection molding a binder is used which consists of a first component, which at best remains rather soft upon cooling of the green body, such as a vegetable oil or a wax (paraffin wax, carnauba wax), and a second component, which has a higher melting temperature, such as polyethylene or polypropylene. The first component is selectively lixiviated with a liquid solvent, such as methylene chloride, acetone and naphtha, and the second component is removed by heating prior to the sintering proper. This method has as a disadvantage that a treatment with organic solvents must be carried out.

EP-A-0,455,913 describes a binder intended for powder injection molding, which is made up of 6-14% by weight of fatty acid and the balance a paraffin wax having a melting point of 50-100°C. Such a binder system does not yield a form-retaining product and, although no communication to that effect is made, it seems necessary to use organic solvents to remove the binder system from the green body.

US-A-5,098,942 discloses a binder system which is intended for use in the manufacture of sintered articles by means of powder injection molding. The binder system is made up of 30-90% by weight of polyvinyl acetate (PVAc) and 10-70% by weight of a second component, preferably consisting of polethylene glycol (PEG). As appears from the Examples, PVAc is present in an amount of at least 50% by weight and PEG in an amount of at most 40% by weight. The binder system is removed from the green body by a thermal treatment under an inert gas at temperatures rising from 200 to 550°C. Here PEG is cracked before evaporating. This method is laborious and moreover the use of hydrogen during sintering is an indication that an additional measure is necessary to remove the binder system to a far-reaching extent.

EP-A-0,456,441 discloses a binder system for powder injection molding, which consists of a solid solution of a minor amount of a polymer having a high molecular weight in an excess of a solid chemical substance having a low molecular weight, which functions as solvent. In molten condition the two substances are mutually soluble and upon solidification, when cooling takes place, no phase separation occurs. The polymer referred to can consist of polystyrene or a copolymer of ethylene and vinyl acetate (EVA). Mentioned as examples of chemical substances to be used as solvent are acetanilide, diphenyl sulfone, diphenyl carbonate, antipyrine, rosin and naphthalene. Stearic acid can be applied to the powder particles to promote the bonding between the particles and the binder system. The solid chemical substance having a low molecular weight can be removed from the green body according to any suitable technique, for instance by extraction with a liquid solvent, including water. On account of the fact that a solid solution is required, this technique has the important disadvantage that the solid chemical substance of low molecular weight can be removed only laboriously and incompletely by lixiviation with a liquid solvent.

Finally, from EP-A-0,362,866 it is known to use during powder injection molding a binder system containing two essential components, i.e. a water-soluble thermoplastic polymer and a water-insoluble thermoplastic polymer. The binder preferably consists of 60-90% by weight of polyethylene oxide, 5-38% by weight of a water-insoluble polymer and 2-35% by weight of a lubricant or plasticizer. The polyethylene oxide used has a molecular weight ranging between 50,000 and 5,000,000. At a molecular weight lower than 50,000, the strength of the molding (the green body) is insufficient. As appears from the Examples, after a part of the binder has been washed out, the green body should be heated very gradually, because otherwise internal cracks will occur or the form retention will become lost. Only hereafter, sintering can take place at a high temperature, the remainder of the binder being burnt out. This known method is laborious, because the washing out and heating of the green body should be accurately controlled and can only be performed very slowly, which results in very long production times.

It has now been found that the above-discussed disadvantages of the prior art can be avoided by using a special binder system as defined hereinafter.

The main object of this invention is to provide a method for manufacturing molded articles from metallic or ceramic powder particles according to the technique of powder injection molding, in which a binder system is used which can be removed easily, fast and completely by the combination of lixiviation with an aqueous liquid and thermal decomposition.

According to another object of the invention, a good wetting of the powder particles is ensured, so that a better mixture is obtained, which results in a greater homogeneity, both of the green body and of the final product obtained after sintering.

A further object of this invention is to provide a reliable method by which a strong green body is obtained, the occurrence of cracks is avoided and a high form retention is achieved.

A still further object of the invention is to provide a method in which no dangerous or noxious additives are used nor any laborious treatments are carried out, which moreover are sometimes not without risk.

Finally, in accordance with the invention a binder system is provided which is suitable to be used in powder injection molding.

The above-described objects of the invention can be achieved by using a binder system which contains three esssential components which are matched to each other in the manner indicated hereinbelow and in which one of those components is a water-soluble solid organic substance having a relatively low molecular weight. The invention accordingly relates to a method for manufacturing molded articles starting from metallic or ceramic powder particles, in which the powder particles are mixed homogeneously with a binder system, the mixture is shaped in fluid condition by injection molding, the obtained molding is treated with an aqueous liquid in order to wash out a part of the binder system, and the molding thus treated is subjected to a thermal treatment at high temperature in order to remove the remainder of the binder system and to sinter the powder particles to form a coalescent structure, which method is characterized in that a binder system is used which contains the following three essential components in the specified amounts:
- A. a water-soluble solid organic substance with polar groups and a molecular weight of 3000-8000, which constitutes at least 50% by volume of the total binder system,
- B. a water-insoluble surface-active substance with polar groups, which is soluble in component A, which substance constitutes at most 15% by volume of the total binder system, and
- C. a water-insoluble backbone polymer which is mutually soluble with component B, but is insoluble in component A, while the backbone polymer constitutes at least 10% by volume of the binder system.

The invention further relates to a binder system as defined above, which is suitable to be used in the practice of the described method for manufacturing shaped articles.

The powder particles for use according to the invention can be metal particles or ceramic particles. The metal particles can in principle consist of any metal, for instance chromium, molybdenum, tungsten, iron, nickel, copper, zinc or aluminum or of mixtures or alloys of two or more metals, such as an iron/nickel alloy. The ceramic particles can be any particles known from the ceramics industry, often of inorganic materials such as metal oxides, which do not react with the binder system but are capable of fusing at the sintering temperature. Suitable ceramic particles are, for instance, particles of zirconium oxide, silicon oxide or aluminum oxide. Also usable are mixtures of metal particles and ceramic particles, the so-called "cermets". The morphology of the powder particles can be very different, depending on the nature of the metal or the ceramic material. The particle size can also be widely varying. In general, metallic powder particles have a particle size in the range of 2-8 µm, while ceramic powder particles are usually considerably finer and have a particle size in the range of <2 µm. The size of the powder particles is of importance, since the finer the particles, the more compact the eventual molding will be. The size of the powder particles is further of importance in connection with the wetting of the particles by the binder system, as will be discussed hereinafter.

The binder system contains three essential components, of which component A is the main component, which constitutes at least 50% by volume and typically between 50 and 89% by volume of the total binder system. Component A is a water-soluble solid organic substance with polar groups and a molecular weight of 3000-8000. Component A serves to keep the powder particles homogeneously distributed prior to and during the powder injection molding to form the green body. The green body formed then possesses sufficient strength of itself to wash out at least a part, viz. at least 10%, and preferably even a very considerable part, viz. of from 50 to 90%, of component A through a number of flushing treatments with an aqueous liquid. This wash-out operation can be effected while the exact shape and dimensions of the green body are maintained. Washing out a considerable part of component A is further of importance to prevent the molding from being blown up, as it were, during the later thermal treatment, which would render it impossible to obtain a good end product. When the molecular weight of component A is greater than 20,000, defects arise easily, especially in the form of cracks. On the other hand, the supporting capacity and the strength are reduced when the molecular weight of component A is very low. The best results were obtained when the molecular weight of component A is between 3,000 and 8,000.

Component A can be both a monomeric and a polymeric solid organic substance, which is preferably a substance with a melting point in the range of 40-120°C. Preferred, however, is a macromolecular monomeric substance and especially a polymeric substance. The presence of polar groups, such as hydroxyl, carboxyl, carbonyl, ester, ether, amino groups, etc., is of importance to render the substance water-soluble. Of these groups, a sufficient number should be present to obtain the desired solubility, so that the washing out of component A can proceed efficiently. Conversely, the presence of more polar groups than is necessary is undesirable because it increases the chances of carbonization during the thermal treatment. Component A is also preferred to contain no groups or as few groups as possible which produce undesirable combustion residues when the residual part of component A is decomposed and combusted during the thermal treatment of the green body.

Examples of organic substances for use as component A are single organic substances such as acetamide, macromolecular substances such as sugars, starch esters and starch ethers, polyethers and polyether glycols, and polymers such as polyethylene glycol (PEG) and polyvinyl alcohol (PVA). The use of the last-mentioned polymers is preferred because they possess a high oxygen index and promote a clean combustion of the residues of the binder system during the thermal treatment of the green body.

The amount of component A, as stated, is at least 50% by volume of the total binder system. When component A accounts for less than 50% by volume, it is difficult to achieve a homogeneous distribution of the powder particles in the mixture in fluid condition, prior to the injection molding, and to maintain that distribution during injection molding. Moreover, when less than 50% by volume of component A is used, a rather large residual amount of the binder system should be burnt out later, so that the energy consumption and the amount of combustion residues increase and the chances of deformation occurring during the thermal treatment and the sintering of the green body increase. When on the other hand a very large amount of component A is present, for instance an amount exceeding 89% by volume of the total binder system, there is a good chance that too little component C is present to maintain the desired high form stability during the thermal treatment and sintering.

Component B of the binder system is a surface-active substance with polar groups, which is water-insoluble or substantially so, but which is soluble in component A. Component B serves to effect an intimate bond between the powder particles and component A and hence to effect a homogeneous distribution of the powder particles, which is of great importance, in particular when the mixture is introduced into the injection mold in fluid condition. In other words, component B provides that the rheology or the flow behavior of the mixture at the injection molding temperature is so good that the powder particles remain present in a homogeneous distribution. Component B has a strongly wetting action on the surface of the powder particles and firmly attaches thereto. Because component B on the other hand is soluble in component A, the tight bond between the powder particles and component A is ensured. By 'soluble' is meant here that the components A and B are molecularly miscible with each other at the injection molding temperature.

Surface-active substances which satisfy the specifications given above for component B are the known lubricants with a hydrophobic residue, for instance a long alkyl residue which may or may not be branched, and polar groups, in particular carboxyl groups or derivatives thereof, such as esters. As examples of such substances, higher fatty acids and fatty acid esters such as waxes can be mentioned. Preferably, fatty acids having at least 12 carbon atoms are used, such as stearic acid, palmitic acid, oleic acid, etc. As an example of a higher fatty acid ester, Acrawax can be mentioned. Of course, as component B preferably a surface-active substance is chosen which does not produce any noxious combustion residues in the thermal treatment of the green body.

Theoretically, the optimum amount of component B is the amount which is necessary to cover the surface of the powder particles entirely with a monomolecular layer. The particle size and the morphology of the powder particles are therefore of importance for determining the amount of component B. The finer the powder particles, the more component B is used. Accordingly, for ceramic powder particles, which, as stated above, are generally finer than metallic powder particles, as a rule more component B will be used. Although the theoretically optimum amount of component B can be calculated from the specific surface of the powder particles, in practice a larger amount has been found often to give better results, so that it is recommendable to determine the most suitable amount experimentally. Thus it has been found that the amount of component B is at most 15% by volume and is preferably in the range of 1-10% by volume. If too little component B is present, no good bond between the powder particles and component A is effected and no homogeneous distribution of the powder particles is achieved. On the other hand, too large an amount of component B, which, as stated, is water-insoluble, results in a retardation of the wash-out of component A from the green body and in the formation of undesirable carbon residues in the sintered molding.

The third essential component of the binder system, here designated as component C, is a water-insoluble backbone polymer, which is mutually soluble with component B, but is insoluble in component A. By 'mutually soluble' is here meant the same molecular miscibility as described earlier for component B with respect to component A. That component C is insoluble in component A means that the two components after injection molding and cooling are not molecularly mixed with each other. Then they co-exist as mutually separate areas or, to put it differently, as separate phases. The components A and C for use according to the invention are thermodynamically immiscible in molten condition. That component C according to the invention is insoluble in component A constitutes a crucial point of difference with the teaching of EP-A-0,456,441 discussed above, which prescribes a condition of "substantially homogeneous solid solution". This condition can only be achieved when using components which can be mixed with each other thermodynamically in molten condition. For a scientific description of this phenomenon, reference can be made to G.B. Kupperblatt and C.I. Chung, "Evaluation of Solubility in Powder Injection Molding Binders", Int. J. Powder Metall., 1993, Vol. 29, pp. 229-237.

The insolubility of component C in component A according to the invention provides the important advantages that the debinding of component A proceeds faster, that there is less chance that the green body swells and cracks arise in it, and that the addible volume of powder particles is greater. The present component C has as a function to provide that the green body retains its dimensional stability during the initial phase of the thermal treatment when the powder particles are still to grow onto each other.

All polymers which satisfy the conditions mentioned are suitable to be used as backbone polymer C. The polymer can be a homopolymer or a copolymer and this last can be a statistic copolymer, a block copolymer or a seed copolymer. Preferably, a thermoplastic polymer is used. Suitable examples thereof are polyethylene (PE), polypropylene (PP), polyvinyl acetate (PVAc) and copolymers of ethylene and vinyl acetate (EVA). Preferably a polymer is chosen which does not produce any noxious combustion residues in the thermal treatment of the green body. The polymers which are eligible for use as component C typically contain a plasticizer to facilitate processability. These plasticizers, as is known, are often chosen from paraffins, waxes, fatty acid salts, etc., and are usually present in an amount of at most 20% by volume, based on the total polymer (i.e. the polymer and the plasticizer jointly). The plasticizer is here considered as belonging to component C and so as forming part of the binder system.

Component C is used in an amount of at least 10% by volume, based on the total binder system. When less than 10% by volume of component C is present, the effect described above is obtained to an insufficient extent. Preferably the amount of component C is not more than 40% by volume of the total binder system, because a greater amount does not fulfil any useful function and may slow down the wash-out of component A. Too large an amount of component C moreover increases the risk of damage during the thermal treatment of the green body.

The mixture intended for powder injection molding is prepared by homogeneously mixing the chosen metallic or ceramic powder particles with the components A, B and C of the present binder system. These components, which are usually solid substances at room temperature and then occur in finely divided form, for instance in the form of powder, flakes or grains, can be introduced each separately in a random order, of course with due observance of the relative ratios described, but it is also possible to use a priorly prepared mixture of preferably all three of the components. Such a mixture, which in this field of the art is often designated as plastisol, can be traded as a commercial product and, for that matter, forms one of the aspects of this invention. The powder particles and the binder system are preferably mixed with each other in a ratio such that the mixture contains 55 to 70% by volume of powder particles and accordingly 45 to 30% by volume of the total binder system. The mixing of the powder particles with the binder system can be carried out in a suitable kneading device with heating, for instance at a temperature of 100-200°C, so that a homogeneous paste is obtained. This paste is cooled to a solid product, which is granulated, whereafter the grains are shaped in a common injection molding machine to a product of the desired shape. Usually the injection molding temperature is also in the range of 100-200°C. At the injection molding temperature the mixture should have a rather low viscosity in order enable the manufacture of a substantially perfect shape. Preferably the viscosity of the binder system or the plastisol (i.e. without the powder particles) at the injection molding temperature is <10 Pa.s. The rheology during injection molding as well as the supporting capacity of the binder system are of a nature such that a homogeneous distribution of the metallic or ceramic powder particles is maintained.

After cooling, a solid and firm molding is obtained, the so-called green body, which is treated in an aqueous liquid in order to remove at least a part of component A through lixiviation. The aqueous liquid can consist of demineralized water from which oxygen has been largely removed and to which minor amounts of additives, such as surface-active substances or a lower alcohol, for instance ethanol, may have been added according to need. The aqueous liquid can have a temperature which is for instance between room temperature and 50°C, and the green body is immersed for some time, for instance 30 minutes to 5 hours, in a bath of the aqueous liquid. The lixiviation can be stimulated by stirring the aqueous liquid. If necessary, the bath can be refreshed one or more times. The treatment is generally continued until between 10 and 90% of component A has been washed out. This wash-out proceeds without the green body undergoing any permanent change of shape.

Then the green body is dried to remove residual water and then gradually brought to an increasingly higher temperature. The remaining component A then provides, together with component B, that the shape remains intact. When the temperature is high enough, from about 250°C, the thermal degradation of the binder system begins, whereby gaseous components are released, which diffuse from the molding. It is important that the thermal degradation occurs gradually to avoid the molding being blown up or cracks arising. From the beginning of the thermal degradation until the beginning of the actual sintering of the powder particles, component C provides for the form stability. During the sintering proper, which for instance in the case of iron powder usually takes place at a temperature of 1000-1300°C, the final residues of the binder system are combusted and the powder particles are sintered together to a compact structure. Finally, the molding is cooled. The result is an end product of a very high density, which is more than 90% and often even more than 95%. Further, the molding produced possesses a very high accuracy with only a minimal deviation (less than 0.5%) from the form intended. By the use of the specific binder system according to the invention, the treatments which must be carried out to obtain the eventual sintered article from the green body are considerably simpler and require much less time than described in EP-A-0,362,866 discussed above.

The invention is further explained below in and by a few examples.

### Example 1 and Comparative Example

98% by weight of iron powder (BASF OM-grade) obtained from iron carbonyl and 2% by weight of nickel powder (INCO 4SP) were dry-mixed to Fe₂Ni powder. In a mixer with sigma blade 240 cc of the Fe₂Ni powder were mixed with 160 cc of a binder composed of 70% by volume of polyethylene glycol (PEG 4000 of Merck, melting point about 60°C), 10% by volume of stearic acid (SA) and 20% by volume of polypropylene (PP). The mixture was molded in an injection molding machine to discs of a thickness of 4 mm and to bars of different thicknesses between 0.5 and 4 mm.

The green bodies obtained were treated in oxygen-poor water, in order to effect debinding. This treatment was carried out for 0.5 to 5 hours, depending on the size of the green body. Then all samples were sintered at a temperature of 1200°C for 3 hours (including the time necessary to heat and cool; heating rate 10°C/minute; keeping at sintering temperature for 1 hour; forced cooling), whereby moldings were obtained of a density of 97% of the theoretical density, without loss of form or other defects occurring.

The initial Fe₂Ni powder contained 0.83% by weight of carbon and 0.38% by weight of oxygen. After sintering these contents were reduced to 0.6% by weight of carbon and 0.05% by weight of oxygen.

The above-described method was repeated, using a binder composed of 70% by volume of PEG 4000 and 30% by volume of PP. Even after several hours of mixing, the mixture did not have a good paste structure. The mixture was found to be unsuitable to be molded by powder injection molding, because powder separation arose and the mold cavity was not filled completely (short shots). This proves that it is necessary to include a PEG soluble surface-active substance (SA) in the mixture.

### Example 2

240 cc of the Fe₂Ni powder described in Example 1 was mixed with 160 cc of a binder composed of 65% by volume of PEG 4000, 5% by volume of SA, 20% by volume of PE and 10% by volume of paraffin. This paraffin acts as a plasticizer for PE. Due to the mixing treatment a thin homogeneous paste was obtained, which through injection molding was easily shaped to a molding with a complex structure and with a number of thin cross-connections.

Debinding (2.5 hours) and sintering (3 hours) were carried out as described in Example 1.

The results obtained were analogous. The molding obtained had a density of 97%, exhibited no cracks and showed a faithful correspondence with the original shape of the green body.

## Claims

1. A method of manufacturing molded articles starting from metallic or ceramic powdered particles, in which the powdered particles are homogeneously mixed with a binder system, the mixture is shaped in fluid condition by injection molding, the molding obtained is treated with an aqueous liquid in order to wash out a part of the binder system, and the molding thus treated is subjected to a thermal treatment at high temperature in order to remove the remainder of the binder system and to sinter the powdered particles to a coalescent structure, characterized in that a binder sytem is used which contains the following three essential components in the specified amounts:
- A. a water-soluble solid organic substance with polar groups.and a molecular weight of between 3,000 and 8,000, which constitutes at least 50% by volume of the total binder system,
- B. a water-insoluble surface-active substance with polar groups, which is soluble in component A, which substance constitutes at most 15% by volume of the total binder system, and
- C. a water-insoluble backbone polymer which is mutually soluble with component B, but is insoluble in component A, while the backbone polymer constitutes at least 10% by volume of the binder system.

2. A method according to claim 1, characterized in that component A is chosen from polyethylene glycol (PEG) and polyvinyl alcohol (PVA).

3. A method according to claim 1 or 2, characterized in that component A forms at most 89% by volume of the total binder system.

4. A method according to claims 1-3, characterized in that component B is a fatty acid having at least 12 carbon atoms.

5. A method according to claims 1-4, characterized in that component B forms 1-10% by volume of the total binder system.

6. A method according to claims 1-5, characterized in that component C is chosen from polyethylene (PE), polyvinyl acetate (PVAc) and copolymers of ethylene and vinyl acetate (EVA).

7. A method according to claims 1-6, characterized in that component C forms at most 40% by volume of the total binder system.

8. A method according to claims 1-7, characterized in that component C contains a plasticizer, such as paraffin or a wax, in an amount of at most 20% by volume based on the total component C (polymer + plasticizer).

9. A binder system suitable for use in practising the method according to claim 1, characterized in that the binder system is composed as defined in any one of claims 1-8.

10. A binder system according to claim 9, characterized in that the binder system, at a temperature in the range of 100-200°C, has a viscosity of <10 Pa.s.

## Patentansprüche

1. Verfahren zur Herstellung von Formkörpern, ausgehend von metallischen oder keramischen pulverförmigen Partikeln, wobei die pulverförmigen Partikel homogen mit einem Bindersystem gemischt sind, die Mischung in flüssigem Zustand durch Spritzgießen geformt wird, das erhaltene Formteil zum Auswaschen eines Teils des Bindersystems mit einer wäßrigen Flüssigkeit behandelt wird und das so behandelte Formteil einer thermischen Behandlung bei hoher Temperatur unterzogen wird, um den Rest des Bindersystems zu entfernen, und die pulverförmigen Partikel zu einer koaleszenten Struktur zu sintern, dadurch gekennzeichnet, daß ein Bindersystem verwendet wird, das die folgenden drei essentiellen Komponenten in den angegebenen Mengen enthält:
- A. einen wasserlöslichen organischen Feststoff mit polaren Gruppen und einem Molekulargewicht zwischen 3.000 und 8.000, der mindestens 50 Volumen-% des gesamten Bindersystems ausmacht,
- B. eine wasserunlösliche oberflächenaktive Substanz mit polaren Gruppen, die in der Komponente A löslich ist, wobei diese Substanz höchstens 15 Volumen-% des gesamten Bindersystems ausmacht und
- C. ein wasserunlösliches Grundpolymer, für das mit der Komponente B gegenseitige Löslichkeit gegeben ist, das jedoch in der Komponente A unlöslich ist, wobei das Grundpolymer mindestens 10 Volumen-% des Bindersystems ausmacht.

2. Verfahren gemäß Anspruch 1, dadurch gekennzeichnet, daß die Komponente A aus Polyethylenglykol (PEG) und Polyvinylalkohol (PVA) ausgewählt ist.

3. Verfahren gemäß Anspruch 1 oder 2, dadurch gekennzeichnet, daß die Komponente A höchstens 89 Volumen-% des gesamten Bindersystems ausmacht.

4. Verfahren gemäß den Ansprüchen 1 bis 3, dadurch gekennzeichnet, daß die Komponente B eine Fettsäure mit mindestens 12 Kohlenstoffatomen ist.

5. Verfahren gemäß den Ansprüchen 1 bis 4, dadurch gekennzeichnet, daß die Komponente B 1 bis 10 Volumen-% des gesamten Bindersystems ausmacht.

6. Verfahren gemäß den Ansprüchen 1 bis 5, dadurch gekennzeichnet, daß die Komponente C aus Polyethylen (PE), Polyvinylacetat (PVAc) und Copolymeren von Ethylen und Vinylacetat (EVA) ausgewählt ist.

7. Verfahren gemäß den Ansprüchen 1 bis 6, dadurch gekennzeichnet, daß die Komponente C höchstens 40 Volumen-% des gesamten Bindersystems ausmacht.

8. Verfahren gemäß den Ansprüche 1 bis 7, dadurch gekennzeichnet, daß die Komponente C einen Weichmacher, wie Paraffin oder ein wachs, in einer Menge von höchstens 20 Volumen-%, bezogen auf die gesamte Komponente C (Polymer + Weichmacher), enthält.

9. Zur Verwendung im Verfahren gemäß Anspruch 1 geeignetes Bindersystem, dadurch gekennzeichnet, daß das Bindersystem wie in mindestens einem der Ansprüche 1 bis 8 definiert zusammengesetzt ist.

10. Bindersystem gemäß Anspruch 9, dadurch gekennzeichnet, daß das Bindersystem bei einer Temperatur im Bereich von 100-200°C eine Viskosität von < 10Pa.s. aufweist.

## Revendications

1. Un procédé de fabrication d'articles moulés à partir de particules pulvérulentes métalliques ou céramiques, dans lequel les particules pulvérulentes sont mélangées de façon homogène avec un système de liant, le mélange est conformé à l'état fluide par moulage par injection, le moulage obtenu est traité avec un liquide aqueux afin de lessiver une partie du système de liant, et le moulage ainsi traité est soumis à un traitement thermique à température élevée afin d'éliminer le restant du système de liant et de fritter les particules pulvérulentes en une structure coalescente, caractérisé en ce qu'on utilise un système de liant contenant les trois composantes essentielles suivantes en les quantités spécifiées :
- A. un composé organique solide soluble dans l'eau comportant des groupes polaires d'un poids moléculaire compris entre 3 000 et 8 000, constituant au moins 50% en volume du système de liant total,
- B. un composé tensioactif non soluble dans l'eau comportant des groupes polaires non soluble dans l'eau, qui est soluble dans le composé A, ce composé constituant au plus 15% du système de liant total,
- C. un polymère de support soluble dans composant B, mais insoluble dans composant A, le polymère de support constituant au moins 10% du système de liant.

2. Un procédé selon la revendication 1, caractérisé en ce que la composante A est choisie parmi polyéthylène glycol (PEG) et polyvinyl alcool (PVA).

3. Un procédé selon la revendication 1 ou 2, caractérisé en ce que la composante 1 forme au plus 89% en volume du système de liant total.

4. Un procédé selon les revendications 1 à 3, caractérisé en ce que la composante B est un acide gras ayant au moins 12 atomes de carbone.

5. Un procédé selon les revendications 1 à 4, caractérisé en ce que la composante B forme 1-10% en volume du système de liant total.

6. Un procédé selon les revendications 1 à 5, caractérisé en ce que la composante C est choisie parmi polyéthylène (PE), polyvinylacétate (PVAc) et les copolymères d'éthylène et de vinylacétate (EVA).

7. Un procédé selon les revendications 1 à 6, caractérisé en ce que la composante C forme au plus 40% en volume du système de liant total.

8. Un procédé selon les revendications 1 à 7, caractérisé en ce que la composante C contient un plastifiant tel qu'une paraffine ou une cire, en une quantité d'au plus 20% en volume par rapport au total de la composante C (polymère et plastifiant).

9. Un système de liant approprié pour la mise en oeuvre du procédé selon la revendication 1, caractérisé en ce que le système de liant est composé comme défini dans l'une quelconque des revendications 1-8.

10. Un système de liant selon la revendication 9, caractérisé en ce que le système de liant, à une température comprise entre 100 et 200°C, présente une viscosité < 10Pa s.
